(19) Europäisches Patentamt
European Patent Office
Office européen des brevets

(11) Veröffentlichungsnummer: **0 053 320**
**B1**

(12) # EUROPÄISCHE PATENTSCHRIFT

(45) Veröffentlichungstag der Patentschrift: **21.08.85**

(51) Int. Cl.[4]: **C 09 B 62/016,** D 06 P 3/66, D 06 P 3/10

(21) Anmeldenummer: **81109728.6**

(22) Anmeldetag: **17.11.81**

(54) **Verfahren zur Herstellung von Phthalocyaninverbindungen.**

(30) Priorität: **28.11.80 DE 3044798**

(43) Veröffentlichungstag der Anmeldung:
**09.06.82 Patentblatt 82/23**

(45) Bekanntmachung des Hinweises auf die Patenterteilung:
**21.08.85 Patentblatt 85/34**

(84) Benannte Vertragsstaaten:
**CH DE FR GB LI**

(56) Entgegenhaltungen:
**DE - A - 1 951 409**
**DE - A - 2 005 135**
**DE - A - 2 015 320**
**FR - A - 1 270 859**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Schreiner, Kurt, Dr., Thüringer Strasse 87, D-6444 Hönebach (DE)**
Erfinder: **Jäger, Horst, Dr., Carl-Rumpff-Strasse 37, D-5090 Leverkusen 1 (DE)**

**EP 0 053 320 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der vorliegenden Erfindung ist ein Verfahren zur Herstellung von Verbindungen der Formel

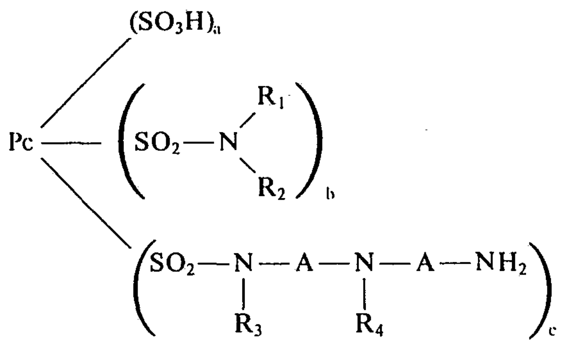

(I)

worin

Pc = Rest eines Phthalocyanins,

$R_1$ und $R_2$ gleich oder verschieden sein können und für Wasserstoff, gegebenenfalls substituiertes Alkyl, gegebenenfalls substituiertes Cycloalkyl, gegebenenfalls substituiertes Aralkyl oder gegebenenfalls substituiertes Aryl stehen können

oder worin

$R_1$ und $R_2$ zusammen mit dem durch sie eingeschlossenen Stickstoffatom einen gegebenenfalls weitere Heteroatome enthaltenden und/oder gegebenenfalls substituierten heterocyclischen Rest bilden,

worin

a = Zahl von 0 bis 3,
b = Zahl von 0 bis 3,
c = Zahl von 1 bis 4,

wobei $(a+b+c) \leq 4$,
worin die Reste A gleich oder verschieden sein können und für gegebenenfalls substituiertes geradkettiges Alkylen mit mindestens 2 C-Atomen, für gegebenenfalls substituiertes verzweigtes Alkylen mit mindestens 3 C-Atomen oder für gegebenenfalls substituiertes Cycloalkylen mit mindestens 5 C-Atomen stehen und worin

$R_3$ = Wasserstoff, gegebenenfalls substituiertes Alkyl, gegebenenfalls substituiertes Aralkyl,
$R_4$ = Rest der Formel

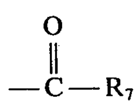

wobei $R_7$ für gegebenenfalls substituiertes Alkyl, Cycloalkyl, Aralkyl, Aryl oder Heteroaryl steht,

dadurch gekennzeichnet, daß man Verbindungen der Formel

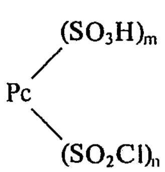

(II)

worin Pc die angegebene Bedeutung hat, m eine Zahl von 0 bis 3, n eine Zahl von 1 bis 4 darstellt und die Summe aus m und n höchstens 4 beträgt,
gegebenenfalls in Gegenwart weiterer Amine der Formel

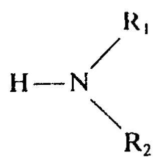

(III)

worin $R_1$ und $R_2$ die oben angegebene Bedeutung haben, mit Aminen der Formel IV

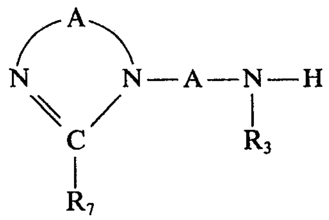

(IV)

worin A, $R_3$ und $R_7$ die oben angegebene Bedeutung haben, umsetzt, und die Zwischenprodukte der Formel

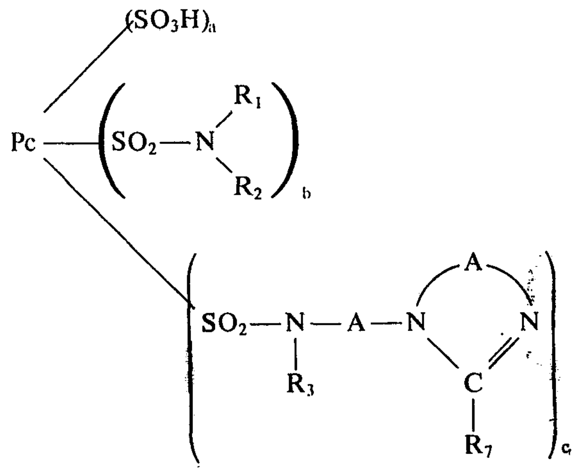

(V)

worin Pc, $R_1$, $R_2$, $R_3$, A, $R_7$, a, b und c die angegebene Bedeutung haben, hydrolysiert.

Der Phthalocyaninrest kann metallfrei sein, er ist jedoch vorzugsweise metallhaltig. Als Metalle kommen Kobalt, Nickel und Kupfer in Betracht.

In den Farbstoffen der Formel (I) ist jede Sulfonsäure- bzw. Sulfonamidgruppe an einen anderen Benzolring des Phthalocyanins in 3- oder 4-Stellung gebunden.

Für die im vorliegenden Anmeldungstext aufgeführten Substituenten $R_1$ bis $R_4$ sowie A gilt:

Gegebenenfalls substituiertes Alkyl $R_1$, $R_2$ steht vorzugsweise für gegebenenfalls durch OH, COOH, $SO_3H$ substituiertes Alkyl ($C_1-C_6$). Beispiele: Methyl, Ethyl, Propyl, Butyl, Amyl, $\beta$-Hydroxyethyl, $\gamma$-Hydroxypropyl, Pentahydroxyethyl, Carboxymethyl, $\beta$-Carboxyethyl, $\beta$-Sulfoethyl, $\beta$-Sulfatoethyl.

Gegebenenfalls substituiertes Cycloalkyl $R_1$, $R_2$ steht vorzugsweise für gegebenenfalls durch OH, COOH, $SO_3H$ substituiertes Cycloalkyl ($C_3-C_7$). Beispiele: Cyclohexyl, 2-Hydroxycyclohexyl, 4-Sulfocyclohexyl.

Gegebenenfalls substituiertes Aralkyl $R_1$, $R_2$ steht vorzugsweise für gegebenenfalls durch OH, COOH, $SO_3H$ im Arylteil substituiertes Aralkyl, dessen Arylteil vorzugsweise 6 oder 10 Kohlenstoffatome aufweist und dessen Alkylteil vorzugsweise 1 bis 6 C-Atome enthält. Beispiele: Benzyl, Phenylethyl, Carboxybenzyl, Sulfobenzyl.

Gegebenenfalls substituiertes Aryl $R_1$, $R_2$ steht vorzugsweise für gegebenenfalls durch OH, COOH, $SO_3H$, Halogen (insbesondere Chlor) substituiertes Phenyl oder Naphthyl. Beispiele: Phenyl, Naphthyl, Chlorphenyl, Methoxyphenyl, Sulfophenyl, Carboxyphenyl.

Bilden $R_1$ und $R_2$ zusammen mit dem durch sie eingeschlossenen Stickstoffatom einen gegebenenfalls weitere Heteroatome enthaltenden und/oder gegebenenfalls substituierten heterocyclischen Rest, so kommen vorzugsweise folgende Gruppierungen in Betracht:

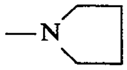 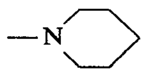 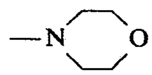 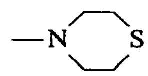

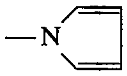 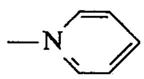

Gegebenenfalls substituiertes geradkettiges Alkylen A mit mindestens 2 C-Atomen, steht vorzugsweise für gegebenenfalls durch OH, $SO_3H$, COOH, substituiertes geradkettiges Alkylen ($C_2-C_{10}$).

Gegebenenfalls substituiertes verzweigtes Alkylen A steht vorzugsweise für gegebenenfalls durch OH, $SO_3H$, COOH substituiertes verzweigtes Alkylen ($C_3-C_{10}$).

Gegebenenfalls substituiertes Cycloalkylen A mit mindestens 5 C-Atomen steht vorzugsweise für gegebenenfalls durch OH, $SO_3H$, COOH substituiertes Alkyl ($C_5-C_7$). Beispiele für Alkylenreste A sind:

$-(CH_2)_i-$ (wobei i = 2–8),

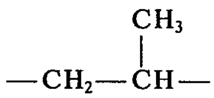 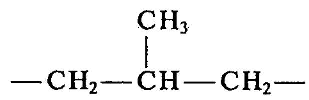 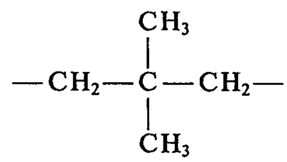

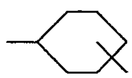 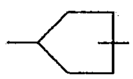 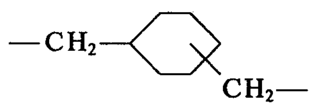 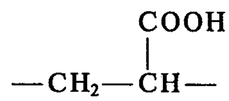

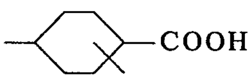 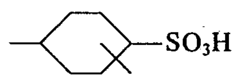 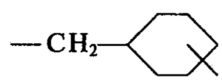

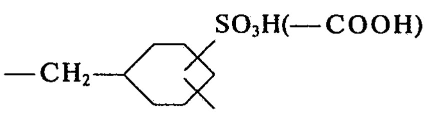

Gegebenenfalls substituiertes Alkyl $R_3$, steht vorzugsweise für gegebenenfalls durch COOH, $SO_3H$, OH substituiertes Alkyl ($C_1-C_8$), Beispiele: $\beta$-Carboxyethyl, $\beta$-Sulfoethyl, $\beta$-Sulfobutyl, $\gamma$-Sulfobutyl, Methyl, Ethyl, Propyl, Isopropyl, Butyl, Carboxymethyl, $\alpha$-Carboxyethyl, $\alpha$-Carboxypropyl, $\alpha$-Carboxybutyl, Sulfomethyl.

Gegebenenfalls substituiertes Aralkyl $R_3$, steht vorzugsweise für gegebenenfalls durch OH, $SO_3H$, COOH substituiertes Phenylalkyl ($C_1-C_4$) oder Naphthylalkyl ($C_1-C_4$). Beispiele: Benzyl, Phenylethyl, Naphthylmethyl, Naphthylethyl, Carboxybenzyl, Sulfobenzyl.

Gegebenenfalls substituiertes Alkyl $R_7$ steht vorzugsweise für gegebenenfalls durch OH, $SO_3H$, COOH, Halogen, Alkoxy ($C_1-C_4$) oder Phenoxy substituiertes Alkyl ($C_1-C_{12}$).

Beispiele für gegebenenfalls substituierte Alkylreste $R_7$ sind: Methyl, Ethyl, n-Propyl, sek.-Propyl, n-Butyl, sek.-Butyl, tert.-Butyl, Neopentyl, n-Hexyl, n-Octyl, n-Decyl, Mono-, Di- oder Trichlormethyl, $\beta$-Chlorethyl, Carbonamidomethyl, $\beta$-Hydroxyethyl, $\beta$-Methoxy-, -Ethoxy- oder -Phenoxyethyl, 2-Hydroxypropyl(2)-, 3-Methoxypropyl, 3-Chlorpropyl, $\beta$-Carboxyethyl, 3-Carboxypropyl, 4-Sulfo- oder Sulfatobutyl.

Gegebenenfalls substituiertes Cycloalkyl $R_7$ steht vorzugsweise für gegebenenfalls durch OH, COOH, $SO_3H$, substituiertes Cycloalkyl ($C_3-C_7$).

Beispiele für gegebenenfalls substituierte Cycloalkylreste $R_7$ sind: Cyclohexyl, Cyclopentyl, 2-Tetrahydrofuryl.

Gegebenenfalls substituiertes Aralkyl $R_7$ steht vorzugsweise für gegebenenfalls durch OH, $SO_3H$, COOH, Halogen, $NO_2$, Alkyl ($C_1-C_4$), Alkoxy ($C_1-C_4$) substituiertes Benzyl, Naphthylmethyl, Phenylethyl.

Beispiele für gegebenenfalls substituierte Aralkylreste $R_7$ sind: Benzyl-, Naphthylmethyl, $\beta$-Phenylethyl, Sulfo-, Carboxy-, Chlor-, Methoxy-, Nitro- oder Methyl-benzyl. Gegebenenfalls substituiertes Aryl $R_7$ steht vorzugsweise für gegebenenfalls durch OH, $SO_3H$, COOH, Alkoxy ($C_1-C_4$), Halogen, $NO_2$, Acyl ($C_1-C_4$), Alkyl ($C_1-C_4$) substituiertes Phenyl oder Naphthyl.

Beispiele für gegebenenfalls substituierte Arylreste $R_7$ sind: Phenyl, 1- oder 2-Naphthyl, Sulfo-,

Carboxy-, Methoxy-, Chlor-, Nitro- oder Acetylphenyl, 2-, 3- oder 4-Tolyl, 2,4- oder 2,5-Dimethoxyphenyl. Gegebenenfalls substituiertes Heteroaryl $R_7$ steht vorzugsweise für gegebenenfalls durch OH, $SO_3H$, COOH, Halogen, Alkyl ($C_1-C_4$) substituiertes Heteroaryl.

Beispiele für gegebenenfalls substituierte Heteroarylreste sind: 2-, 3- oder 4-Pyridyl, 2-Imidazolyl.

Die Umsetzung von Verbindungen der Formel II mit Verbindungen der Formel IV wird vorzugsweise im wäßrigen, oder aber im wäßrig-organischen oder organischen Medium, bei Temperaturen zwischen −10°C und dem Siedepunkt des Lösungsmittels, vorzugsweise aber zwischen 0 und 60°C durchgeführt, wobei man zweckmäßigerweise die freiwerdende Säure durch Zusatz von Alkali, wie z. B. Natriumbicarbonat, Soda, Natronlauge oder Natriumacetat neutralisiert bzw. abpuffert oder gegebenenfalls die freiwerdende Säure durch einen Überschuß an Amin der Formel

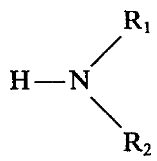

bindet.

Als organische Lösungsmittel kommen vor allem Aceton, Alkohole, Chlorkohlenwasserstoffe wie Ethylenchlorid oder Chlorbenzol oder auch aprotische polare Lösungsmittel wie Dimethylformamid in Betracht.

Die Hydrolyse der Verbindungen der Formel V zu Verbindungen der Formel I kann vorzugsweise durchgeführt werden im wäßrig-organischen oder bevorzugt wäßrigem Medium bei mäßig erhöhter Temperatur (ca. 30—60° C) im Neutralbereich oder im gemäßigt alkalischem Milieu.

Die Verbindungen I können als Farbstoffe Verwendung finden, insbesondere nach Verseifung der Gruppe $R_4$ und folgender Umsetzung der endständigen Aminogruppe mit den zahlreichen in der Literatur beschriebenen Reaktivkomponenten oder Alkylierungsmitteln.

**Patentanspruch**

Verfahren zur Herstellung von Verbindungen der Formel

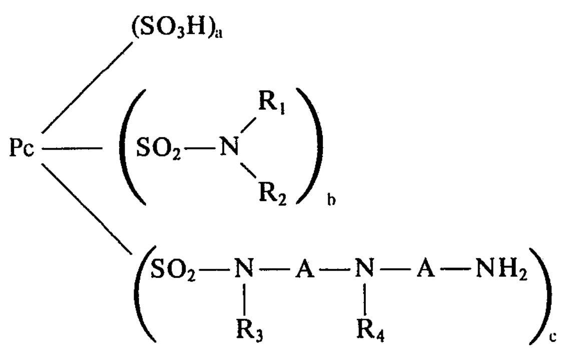

(I)

worin

Pc = Rest eines Phthalocyanins,

$R_1$ und $R_2$ gleich oder verschieden sein können und für Wasserstoff, gegebenenfalls substituiertes Alkyl, gegebenenfalls substituiertes Cycloalkyl, gegebenenfalls substituiertes Aralkyl oder gegebenenfalls substituiertes Aryl stehen können

oder worin

$R_1$ und $R_2$ zusammen mit dem durch sie eingeschlossenen Stickstoffatom einen gegebenenfalls weitere Heteroatome enthaltenden und/oder gegebenenfalls substituierten heterocyclischen Rest bilden,

worin

a = Zahl von 0 bis 3,
b = Zahl von 0 bis 3,
c = Zahl von 1 bis 4,

wobei $(a+b+c) \leq 4$,

worin die Reste A gleich oder verschieden sein können und für gegebenenfalls substituiertes geradkettiges Alkylen mit mindestens 2 C-Atomen, für gegebenenfalls substituiertes verzweigtes Alkylen mit mindestens 3 C-Atomen oder für gegebenenfalls substituiertes Cycloalkylen mit mindestens 5 C-Atomen stehen und worin

$R_3$ = Wasserstoff, gegebenenfalls substituiertes Alkyl, gegebenenfalls substituiertes Aralkyl,
$R_4$ = Rest der Formel

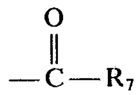

wobei $R_7$ für gegebenenfalls substituiertes Alkyl, Cycloalkyl, Aralkyl, Aryl oder Heteroaryl steht,

dadurch gekennzeichnet, daß man Verbindungen der Formel

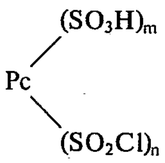

(II)

worin Pc die angegebene Bedeutung hat, m eine Zahl von 0 bis 3, n eine Zahl von 1 bis 4 darstellt und die Summe aus m und n höchstens 4 beträgt,
gegebenenfalls in Gegenwart weiterer Amine der Formel

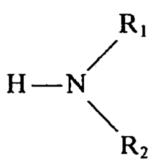

(III)

worin $R_1$ und $R_2$ die oben angegebene Bedeutung haben, mit Aminen der Formel IV

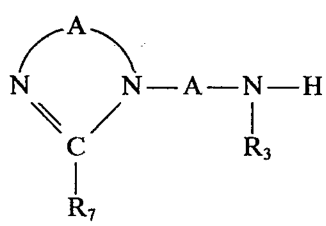

(IV)

worin A, $R_3$ und $R_7$ die oben angegebene Bedeutung haben, umsetzt, und die Zwischenprodukte der Formel

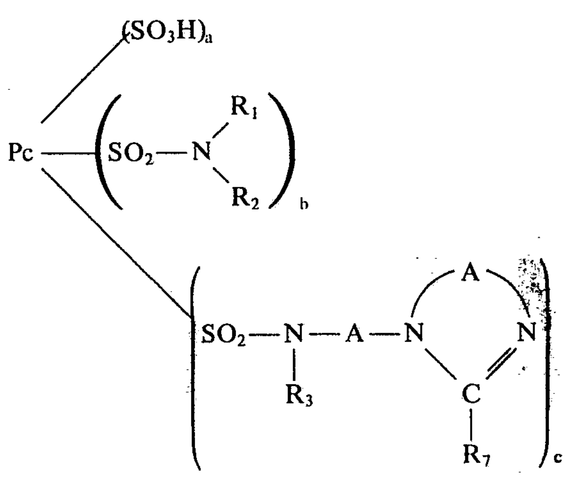

(V)

worin Pc, $R_1$, $R_2$, $R_3$, A, $R_7$, a, b und c die angegebene Bedeutung haben, hydrolysiert.

## Claim

Process for the preparation of compounds of the formula

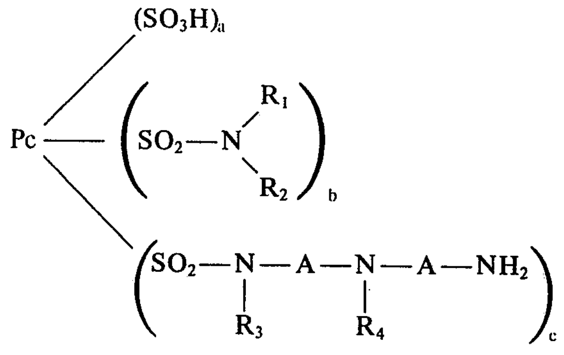

(I)

wherein

Pc = the radical of a phthalocyanine,
$R_1$ and $R_2$ can bei identical or different and can represent hydrogen, optionally substituted alkyl, optionally substituted cycloalkyl, optionally substituted aralkyl or optionally substituted aryl,

or wherein

$R_1$ and $R_2$, together with the nitrogen atom between them, form a heterocyclic radical which optionally contains further hetero-atoms and/or is optionally substituted,

wherein

a = a number form 0 to 3,
b = a number from 0 to 3,
c = a number from 1 to 4,

wherein $(a+b+c) \leq 4$,
wherein the radicals A can be identical or different and represent optionally substituted straight-chain alkylene with at least 2 C atoms, optionally substituted branched alkylene with at least 3 C atoms or optionally substituted cycloalkylene with at least 5 C atoms and wherein

$R_3$ = hydrogen, optionally substituted alkyl, or optionally substituted aralkyl,
$R_4$ = a radical of the formula

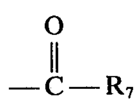

wherein $R_7$ represents optionally substituted alkyl, cycloalkyl, aralkyl, aryl or heteroaryl,

characterised in that compounds of the formula

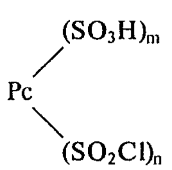

(II)

wherein Pc has the meaning given, m represents a number from 0 to 3, n represents a number from 1 to 4 and the sum of m and n is at most 4, are reacted, if appropriate in the presence of further amines of the formula

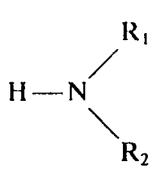

(III)

wherein $R_1$ and $R_2$ have the meaning given above, with amines of the formula IV

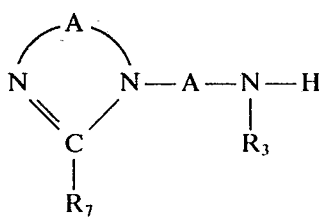

(IV)

wherein A, $R_3$ and $R_7$ have the meaning given above, and the intermediate products of the formula

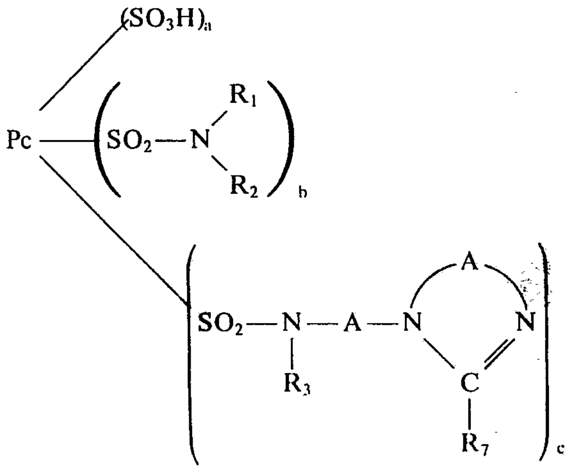

(V)

wherein Pc, $R_1$, $R_2$, $R_3$, A, $R_7$, a, b and c have the meaning given, are hydrolysed.

**Revendication**

Procédé de production de composés de formule

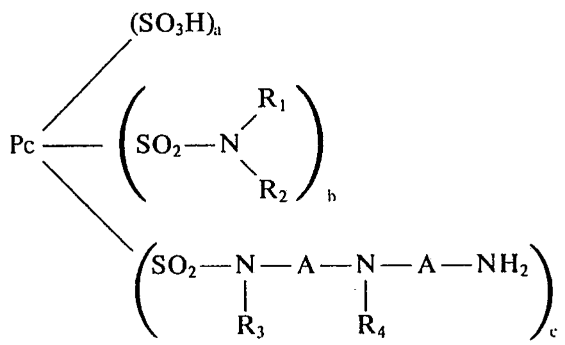

(I)

dans laquelle

Pc représente le reste d'une phtalocyanine,

$R_1$ et $R_2$ peuvent être égaux ou différents et peuvent représenter l'hydrogène, un groupe alkyle éventuellement substitué, un groupe cycloalkyle éventuellement substitué, un groupe aralkyle éventuellement substitué ou un groupe aryle éventuellement substitué,

ou bien

$R_1$ et $R_2$ forment conjointement avec l'atome d'azote auquel ils sont liés un reste hétérocyclique comprenant éventuellement d'autres hétéroatomes et/ou éventuellement substitué,

a est un nombre de 0 à 3,

b est un nombre de 0 à 3,

c est un nombre de 1 à 4,

la somme a + b + c étant inférieure ou égale à 4, les restes A pouvant être égaux ou différents et représentant un groupe alkylène à chaîne droite éventuellement substitué ayant au moins 2 atomes de carbone, un groupe alkylène ramifié éventuellement substitué ayant au moins 3 atomes de carbone ou un groupe cycloalkylène éventuellement substitué ayant au moins 5 atomes de carbone et

$R_3$ représente l'hydrogène, un groupe alkyle éventuellement substitué, un groupe aralkyle éventuellement substitué,

$R_4$ représente un reste de formule

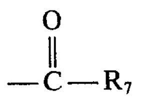

où $R_7$ est un groupe alkyle, cycloalkyle, aralkyle, aryle ou hétéro-aryle éventuellement substitué,

caractérisé en ce qu'on fait réagir des composés de formule

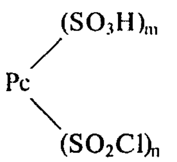

(II)

dans laquelle Pc a la définition indiquée, m est un nombre de 0 à 3, n représente un nombre de 1 à 4 et la somme de m et n s'élève au maximum à 4, éventuellement en présence d'autres amines de formule

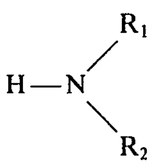

(III)

dans laquelle $R_1$ et $R_2$ ont la définition indiquée ci-dessus, avec des amines de formule IV

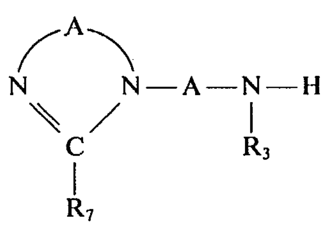

(IV)

dans laquelle A, $R_3$ et $R_7$ ont la définition indiquée ci-dessus, et on hydrolyse les produits intermédiaires de formule

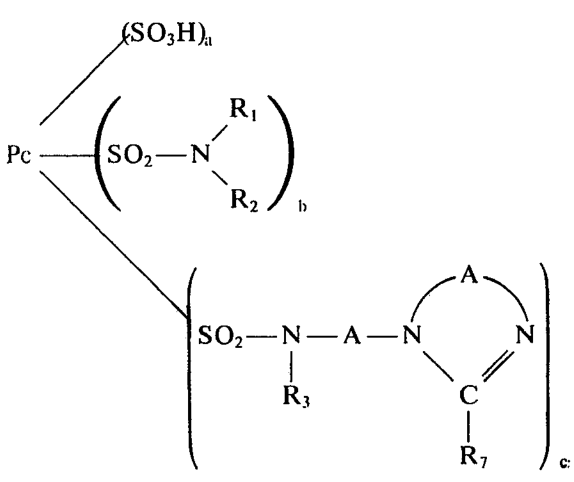

(V)

dans laquelle Pc, $R_1$, $R_2$, $R_3$, A, $R_7$, a, b et c ont la définition indiquée.